# EUROPÄISCHE PATENTSCHRIFT

(11) **EP 1 379 372 B1**
(45) Veröffentlichungstag und Bekanntmachung des Hinweises auf die Patenterteilung: **02.03.2005**
(21) Anmeldenummer: 02730167.0
(22) Anmeldetag: 17.04.2002
(51) Int. Cl.: B29C 47/70, B29C 47/04, B29C 47/06, B29C 47/58

(54) **VORRICHTUNG ZUR HERSTELLUNG EINES EXTRUDIERTEN PROFILSTRANGES**
DEVICE FOR THE PRODUCTION OF AN EXTRUDED PROFILE
DISPOSITIF DE PRODUCTION D'UN PROFILE EXTRUDE

(30) Priorität: 18.04.2001 DE 10119066
(43) Veröffentlichungstag der Anmeldung: 14.01.2004
(73) Patentinhaber: Topf Kunststofftechnik Gesellschaft MbH, 4560 Kirchdorf (AT)
(72) Erfinder: TOPF, Siegfried, A-4050 Traun (AT)
(74) Vertreter: Stoffregen, Hans-Herbert, Dr. Dipl.-Phys.
(86) Internationale Anmeldenummer: PCT/EP2002/004229
(87) Internationale Veröffentlichungsnummer: WO 2002/083396

(56) Entgegenhaltungen:
- DE-A- 3 821 902
- GB-A- 1 410 777
- US-A- 4 917 851
- US-A- 5 620 714
- "SHORT PATH LENGTHS IN COEXTRUSION FEEDBLOCK INCREASE LAYER STABILITY" MODERN PLASTICS INTERNATIONAL, MCGRAW-HILL,INC. LAUSANNE, CH, Bd. 20, Nr. 7, 1. Juli 1990 (1990-07-01), Seite 12 XP000165929 ISSN: 0026-8283

## Beschreibung

Die Erfindung bezieht sich auf eine Vorrichtung zur Herstellung eines extrudierten Profilstranges durch Koextrusion unterschiedlicher Materialien, insbesondere eines Profilstranges mit zumindest drei parallel und beabstandet zueinander verlaufenden Stegen, umfassend zumindest zwei die unterschiedlichen Materialien abgebende erste und zweite Extruder, die über jeweils einen ersten bzw. zweiten Knotenpunkf mit mehreren die unterschiedlichen Materialien führenden Fließkanälen eines Werkzeugs verbunden sind, das zumindest drei langgestreckte, zwei äußere erste Austrittsschlitze und einen mittleren zweiten Austrittsschlitz aufweist, wobei die äußeren ersten Austrittsschlitze mit jeweils einem der von dem ersten Knotenpunkt ausgehenden ersten Fließkanälen und der mittlere zweite Austrittsschlitz mit zumindest einem von dem zweiten Knotenpunkt ausgehenden zweiten Fließkanal verbunden sind.

Um aus Kunststoff bestehende Halbzeuge oder Profile kontinnierlich herstellen zu konnen, gelangen Extrusionsverfahren zur Anwendung. Hierbei wird thermoplastischer Kunststoff in Form von zum Beispiel Pulver oder Granulat in einen Extruder aufgegeben, mit Stabilisatoren. Gleitmittel und gegebenenfalls Farb- und Füllstoffen versetzt und sodann mittels einer Schnecke zu einem profilgebenden Extrusionswerkzeug gefördert. Hierbei werden die Materialien verdichtet, entgast und unter gleichzeitigem Mischen und Kneten homogenisiert Hierdurch wird eine homogene fließfähige Mischung, die sogenannte Formmasse gewormen, die auf eine Temperatur etwärmt bzw. gehalten wird, die im unteren Bereich durch die Plastifizierung und im oberen Bereich durch die Zersetzung des Materials bestimmt wird. Nach Durchsetzen einer die Geometrie vorgebenden Extrusionsdüse durchläuft das Material eine Kalibriereinheit, die aus einer Kombination Trocken-Nass-Kalibrierung besteht. Anschließend wird das Material durch einen Vollbad-Vakuum- oder Sprüh-Vakuum-Tank mit eingebauten Kalibrierblenden geführt.

Eine Extrusionsvorrichtung ist der DE 197 44 515 zu entnehmen. Dabei werden die Fließkanäle unmittelbar vor einer Profilscheibe des Werkzeuges vereinigt, um ein Strangprofil herzustellen.

Aus der EP 0 299 736 A1 ist ein Koextrusionswerkzeug bekannt, in dem ebenfalls mehrere Fließkanäle verlaufen, die innerhalb des Werkzeuges zusammengeführt werden, um ein mehrschichtiges Strangprofil herzustellen, das einen Sandwichaufbau zeigt.

Eine gattungsgemäße Vorrichtung zum Extrudieren eines mehrschichtigen Stranges aus thermoplastifizierten Kunststoffen ist der DE 38 21 902 A1 zu entnehmen. Dabei werden von Extrudem ausgehende Einlaufkanäle zu einem Verteilerblockgchäuse geführt, um die Einläufkanäle mit der Anzahl der Schichten des Stranges entsprechenden Fließkanälen zu verbinden, die parallel geführt zu den Austrittsöffnungen eines Werkzeuges verlaufen.

Um ein mehrschichtiges Profilteil aus unterschiedlichen Materialien nach der US 4,917,851 mittels Koextrusion herzustellen, gehen von Verteilerknoten Fließkanäle aus; wobei jeweils ein Fließkanal zu zumindest einer Austrittsöffnung eines Werkzeuges führt.

Der vorliegenden Erfindung liegt das Problem zugrunde, eine Vorrichtung der eingangs genannten Art so weiterzubilden, dass Profilstränge extrudiert werden körmen, die aus unterschiedlichen Materialien bestehen können, um insbesondere preiswerte wie Recyclematerialien verarbeiten zu können. Dabei soll sichergestellt sein, dass parallel zueinander verlaufenden relativ breiten Schlitzen das zu extrudierende Material im erforderlichen Umfang zuströmt.

Erfindungsgemäß wird das Problem im Wesentlichen dadurch gelöst, dass der mittlere zweite Austrittsschlitz mit von dem zweiten Knotenpunkt ausgehenden zwei zweiten Fließkanälen verbunden ist und dass zwischen den zwei zweiten Fließkanälen einer der ersten fließkanäle verläuft. Dabei verlaufen der mittlere Austrittsschlitz und die äußeren Austrittsschlitze parallel zueinander. Die Knotenpunkte selbst sind mit jeweils einem Extruder verbunden.

Um auch komplexe Profilstränge berzustellen, sieht eine Weiterbildung der Erfindung vor, dass von dem ersten Knotenpunkt weitere Fließkanäle ausgehen, die zu weiteren vorzugsweise schlitzförmigen Austrittsöffnungen führen, die im Querrandbereich zumindest einer der äußeren langgestreckten Austrittsöffnungen verlaufen.

Insbesondere geht von dem ersten Knotenpunkt zumindest ein weiterer Fließkanal aus, der zu einer weiteren an einem Querrandbereich einer der langgestreckten Austrittsöffnungen, insbesondere in einem Querrandbereich der mittleren Austrittsöffnung verlaufenden Austrittsöffnung führt.

Bevorzugterweise gehen von dem ersten Knotenpunkt zumindest vier Fließkanäle aus, von denen zwei in die äußeren langgestreckten Austrittsöffnungen und zwei senkrecht zu diesen verlaufende Austrittsöffnungen führen, von denen sich jeweils eine entlang der Querrandbereiche der äußeren langgestreckten Austrittsöffnungen erstreckt.

Die Austrittsöffnungen selbst münden beabstandet zueinander in einer Austrittsdüse des Werkzeuges, so dass die gewünschte Profilgeometrie erzielbar ist. Dabei können innere Stege, insbesondere der durch die mittlere langgestreckte Austrittsöffnung extrudierte, aus preiswertem Kunststoffmaterial wie Recycle-Material bestehen.

Weitere Einzelheiten, Vorteile und Merkmale der Erfindung ergeben sich aus den Merkmalen des Ansprüche.

Um durch Extrusion Profile herzustellen, die aus Abschnitten unterschiedlicher Materialien bestehen und parallel zueinander verlaufende relativ langgestreckte Stege im Bereich von zum Beispiel 100 mm umfassen, wird erfindungsgemäß eine Vorrichtung mit einem Werkzeug vorgeschlagen, dessen Fließkanäle den erforderlichen Querschnitt aufweisen, um die Materialzufuhr zu Austrittsöffnungen wie -schlitze bzw. Breitschlitzdüsen sicherzustellen.

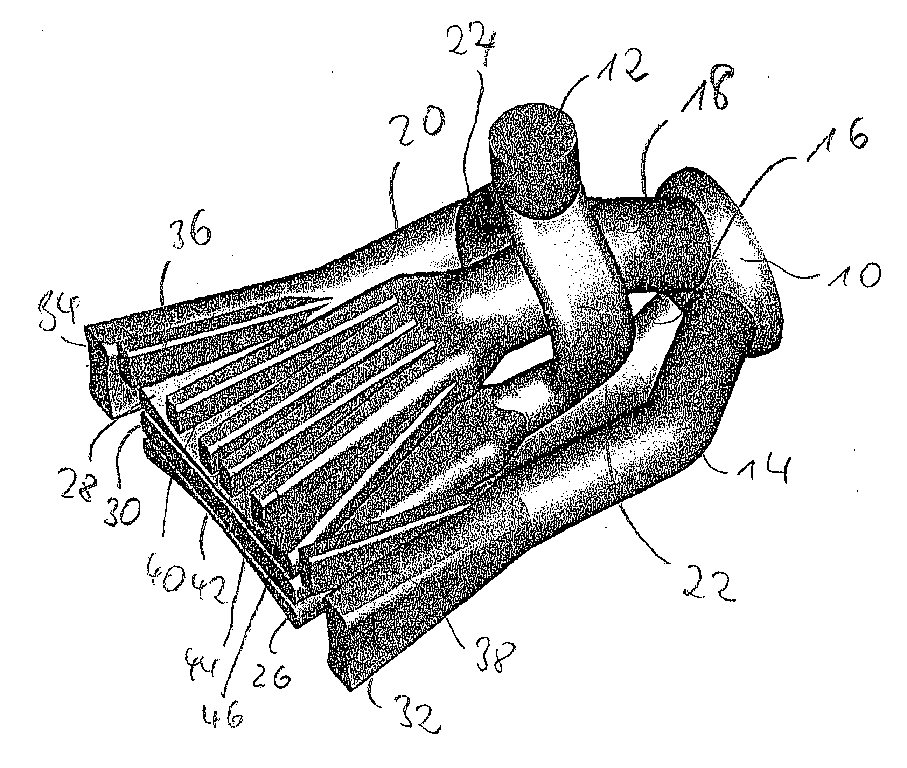

In der einzigen Figur sind rein prinzipiell in perspektivischer Darstellung in einem Werkzeug einer Extrusionsvorrichtung verlaufende Fließkanäle dargestellt, die von einem von insgesamt zwei Knotenpunkten 10, 12 ausgehen, die jeweils mit einem Extruder verbunden sind, über den die Fließkanäle mit der fließfähigen Formmasse beschickt werden. Dabei gehen im Ausführungsbeispiel von dem ersten Knotenpunkt 10 vier Fließkanäle 14, 16, 18 und 20 und von dem zweiten Knotenpunkt 12 zwei Fließkanäle 22, 24 aus.

Wie die Prinzipdarstellung verdeutlicht, weist das Werkzeug drei langgestreckte Austrittsschlitze 26, 28, 30 auf, die parallel zueinander verlaufen, wobei die äußeren Austrittsschlitze 26, 28, die in entsprechende Austrittsdüsen des Extrusionswerkzeuges übergehen, mit den zu dem ersten Knotenpunkt 10 führenden Fließkanälen 16, 18 und der mittlere Austrittsschlitz 30 mit dem zweiten Knotenpunkt 12 über die Fließkanäle 22, 24 verbunden sind.

Um den Austrittsschlitz 30 im erforderlichen Umfang mit fließfähigem homogenisierten und verdichteten Material zu versorgen, wird der Austrittsschlitz 30 über die zwei Fließkanäle 22, 24 von dem Knotenpunkt 12 versorgt, wobei die Fließkanäle 22, 24 den zu dem oberen Austrittsschlitz 30 rührenden Fließkanal 18 bereichsweise umgeben. Mit anderen Worten verlaufen die Fließkanäle 22, 24 im Lappungsbereich zu dem Fließkanal 18 senkrecht oder im Wesentlichen senkrecht.

Dadurch, dass der mittlere Austrittsschlitz 30 mit zwei Fließkanälen 22, 24 verbunden ist, kann ungeachtet des geringen Querschnitts der Fließkanäle 22, 24 hinreichend Formmasse zugeführt werden. Mit anderen Worten kann aufgrund der erfindungsgemäßen Anordnung der Fließkanäle eine Versorgung der Austrittsschlitze 26, 28, 30 mit dem verdichteten fließfähigen Material im erforderlichen Umfang erfolgen.

Ferner gehen von dem ersten Knotenpunkt 10 neben den zu den äußeren langgestreckten Schlitzdüsen 26, 28 führenden Fließkanälen 16, 18 zwei weitere Fließkanäle 14, 20 aus, die in senkrecht zu den Austrittsschlitzen 26, 28, 30 und entlang deren Querrändem verlaufenden Schlitzen 32, 34 münden. Des Weiteren zweigen von den Fließkanälen 14, 20 sowie von dem Fließkanal 18 weitere im Schnitt quadratische bzw. rechteckförmige Austrittsöffnungen 36, 38 bzw. 40, 42, 44, 46 ab, um ein gewünschtes Extrusionsprofil ausbilden zu können. Dabei sind Austrittsöffnungen 40, 42, 44, 46 entlang der Außenlängsseite des oberen Austrittsschlitzes 28 angeordnet, also auf der zu dem mittleren Schlitz 30 femliegenden Seite.

Dadurch, dass die von dem zweiten Knotenpunkt 12 ausgehenden Fließkanäle einen von dem ersten Knotenpunkt 12 ausgehenden Fließkanal 18 bereichsweise umschlingen, kann bei optimaler Raumausnutzung im erforderlichen Umfang verdichtetes fließfähiges Material zu dem Austrittsschlitz 30 strömen, wobei die Knotenpunkte 10, 12 mit Extrudern verbunden sind, über die unterschiedliche Materialien plastifiziert werden.

## Patentansprüche

1. Votrichtung zur Herstellung eines extrudierten Profilstranges durch Koextrusion unterschiedlicher Materialien, insbesondere eines Profilstranges mit zumindest drei parallel und beabstandet zueinander verlaufenden Stegen, umfassend zumindest zwei die unterschiedlichen Materialien abgebende erste und zweite Extruder, die über jeweils einen ersten bzw. zweiten Knotenpunkt (10, 12) mit mehreren die unterschiedlichen Materialien führenden Fließkanälen (14, 16, 18, 20, 22, 24) eines Werkzeugs verbunden sind, das zumindest drei lamggestreckte, zwei äußere erste Austrittsschlitze (26, 28) und einen mittleren zweiten Austrittsschlitz (30) aufweist, wobei die äußeren ersten Austrittsschlitze mit jeweils einem der von dem ersten Knotenpunkt (10) ausgehenden ersten Fließkanälen (16, 18) und der mittlere zweite Austrittsschlitz (30) mit zumindest einem von dem zweiten Knotenpunkt (12) ausgehenden zweiten Fließkanal (22, 24) verbunden sind.
**dadurch gekennzeichnet,**
**dass** der mittlere zweite Austrittsschlitz (30) mit von dem zweiten Knotenpunkt (12) ausgehenden zwei zweiten Fließkanälen (22, 24) verbunden ist und dass zwischen den zwei zweiten Fließkanälen einer der ersten Fließkanäle (18) verläuft.

2. Vorrichtung nach Anspruch 1,
**dadurch gekennzeichnet,**
**dass** der mittlere zweite Austrittsschlitz (30) und die äußeren ersten Austrittsschlitze (26, 28) parallel zueinander verlaufen.

3. Vorrichtung nach Anspruch 1 oder 2 ,
**dadurch gekennzeichnet,**
**dass** von dem ersten Knotenpunkt (10) weitere Fließkanäle (14, 20) ausgehen, die zu weiteren vorzugsweise schlitzförmigen Austrittsöffnungen (32, 34) führen, die im Querrandbereich zumindest einer der ersten äußeren Austrittsöffnungen wie Längsschlitze (26, 28) verlaufen.

4. Vorrichtung nach zumindest einem der vorhergehenden Ansprüche,
**dadurch gekennzeichnet,**
**dass** die einen der ersten Fließkanäle (18) umgebenden zwei zweiten Fließkanäle (22, 24) und der erste Fließkanal im Überlappungsbereich senkrecht oder nahezu senkrecht zueinander verlaufen.

5. Vorrichtung nach zumindest einem der vorhergehenden Ansprüche,
**dadurch gekennzeichnet,**
**dass** von dem ersten Knotenpunkt (10) zumindest vier Fließkanäle (14, 16, 18, 20) ausgehen, von denen zwei in die äußeren langgestreckten parallel zueinander verlaufenden ersten Austrittsöffnungen (26, 28) und die verbleibenden in senkrecht zu diesen verlaufenden weiteren Austrittsöffnungen (32, 34) münden, von denen jeweils eine entlang des Querrandbereichs der äußeren ersten Austrittsöffnungen (26, 28) verläuft.

6. Vorrichtung nach zumindest einem der vorhergehenden Ansprüche,
**dadurch gekennzeichnet,**
**dass** von dem ersten Knotenpunkt (10) ein sowohl in einem der äußeren ersten Austrittsöffnungen (28) als auch außenseitig entlang dessen Längsrand verlaufende weitere Austrittsöffnungen (40, 42, 44, 46) mündender Fließkanal (18) ausgeht.

## Claims

1. Device for the production of an extruded profile strand by co-extruding differing materials, particularly a profile strand with at least three parallel and spaced bars, comprising at least two first and second the differing materials releasing extruders which each are connected via a first and second junction point (10, 12), respectively, to several the differing materials carrying flow channels (14, 16, 18, 20, 22, 24) of a tool, that comprises at least three elongated, two outer first outlet slots (26, 28) and one middle second outlet slot (30), where the outer first outlet slots are connected respectively to one of the first flow channels (16, 18) extending from the first junction point (10) and the middle second outlet slot (30) is connected to at least one second flow channel (22, 24) extending from the second junction point (12),
**characterized in**
**that** the middle second outlet slot (30) is connected to two second flow channels (22, 24) extending from the second junction point (12) and that one of the first flow channels (18) runs between the two second flow channels.

2. Device according to claim 1,
**characterized in**
**that** the middle second outlet slot (30) and the outer first outlet slots (26, 28) run parallel to each other.

3. Device according to claim 1 or 2,
**characterized in**
**that** from the first junction point (10) further flow channels (14, 20) extend, which lead to additional preferably slot-shaped outlet openings (32, 34), which run in the transverse peripheral region of at least one of the first outer outlet openings such as longitudinal slots (26, 28).

4. Device according to at least one of the preceding claims,
**characterized in**
**that** the two second flow channels (22, 24), which surround one of the first flow channels (18), and the first flow channel run perpendicular or substantially perpendicular to each other in the overlapping area.

5. Device according to at least one of the preceding claims,
**characterized in**
**that** at least four flow channels (14, 16, 18, 20) extend from the first junction point (10), of which two join into the outer elongated first outlet openings (26, 28) that run parallel to each other and the remaining join into additional outlet openings (32, 34) that run perpendicular in them, of which one, respectively, runs along the transverse peripheral region of the outer first outlet openings (26, 28).

6. Device according to at least one of the preceding claims,
**characterized in**
**that** from the first junction point (10) a flow channel (18) extends, which joins both into one of the outer first outlet openings (28) and in additional outlet openings (40, 42, 44, 46) that run on the outside along its longitudinal edge.

## Revendications

1. Dispositif de production d'un profilé extrudé par la coextrusion de différents matériaux, notamment d'un profilé avec au moins trois traverses parallèles espacées les unes des autres, comprenant au moins deux premières extrudeuses, une première et une seconde extrudeuse dégageant les différents matériaux et reliées via respectivement un premier et/ou un second noeud (10, 12) à plusieurs canaux d'écoulement (14, 16, 18, 20, 22, 24), transportant les différents matériaux, d'un outil présentant au moins trois fentes de sorties, deux premières fentes extérieures (26, 28) et une seconde fente centrale (30), les premières fentes de sortie extérieures étant reliées à respectivement l'un des premiers canaux d'écoulement (16, 18) partant du premier noeud (10) et la seconde fente de sortie centrale (30) étant reliée à au moins un deuxième canal d'écoulement (22, 24) partant du deuxième noeud (12),
**caractérisé en ce que**
la seconde fente de sortie centrale (30) est reliée aux deux seconds canaux d'écoulement (22, 24) partant du second noeud (12) et **en ce que** l'un des premiers canaux d'écoulement (18) s'étend entre les deux seconds canaux d'écoulement.

2. Dispositif selon la revendication 1,
**caractérisé en ce que**
la deuxième fente de sortie centrale (30) et les premières fentes de sortie extérieures (26, 28) sont parallèles les unes aux autres.

3. Dispositif selon la revendication 1 ou 2,
**caractérisé en ce que**
d'autres canaux d'écoulement (14, 20) conduisant aux autres ouvertures de sortie (32, 34) de préférence en forme de fente qui se trouvent dans la zone périphérique transversale d'au moins l'une des premières ouvertures de sortie extérieures, comme des fentes longitudinales (26, 28), partent du premier noeud (10).

4. Dispositif selon l'une quelconque des revendications précédentes,
**caractérisé en ce que**
les deux seconds canaux d'écoulement (22, 24) entourant l'un des premiers canaux d'écoulement (18) et le premier canal d'écoulement s'étendent à la verticale dans la zone de chevauchement et sont quasiment à la verticale les uns par rapport aux autres.

5. Dispositif selon l'une quelconque des revendications précédentes,
**caractérisé en ce que**
du premier noeud (10) partent au moins quatre canaux d'écoulement (14, 16, 18, 20) dont deux débouchent dans les premières ouvertures de sortie (26, 28) extérieures, allongées et parallèles l'une à l'autre et dans les autres ouvertures de sortie (32, 34) restantes à la verticale de ces ouvertures à partir desquelles s'étend respectivement l'une des premières ouvertures de sortie (26, 28) extérieures le long de la zone périphérique transversale.

6. Dispositif selon l'une quelconque des revendications précédentes,
**caractérisé en ce que**
du premier noeud (10) part un canal d'écoulement (18) débouchant à la fois dans l'une des premières ouvertures de sortie extérieures (28) et dans d'autres ouvertures de sortie (40, 42, 44, 46) s'étendant à l'extérieur le long de son bord longitudinal.
